# EUROPEAN PATENT APPLICATION

(11) **EP 4 661 315 A1**
(43) Date of publication of application: **10.12.2025**
(21) Application number: 25175269.7
(22) Date of filing: 09.05.2025
(51) Int. Cl.: H04B 7/185

(54) **SATELLITE TRACKING METHOD FOR GROUND STATION**

(30) Priority: 03.06.2024 TW 113120542
(71) Applicant: Alpha Networks Inc., 300094 Hsinchu (TW)
(72) Inventor: TSAI, Geng-Shin, 300094 Hsinchu (TW)
(74) Representative: Reichert & Lindner Partnerschaft Patentanwälte

(57) **Abstract**

A satellite tracking method for ground station (10) comprises selecting a plurality of alternative beams, each of which corresponds to one of communication beams (241B, 242B, 251B, 253B, 261B, 262B) adjacent to a best communication beam (252B); and determining whether the best communication beam (252B) is going to be replaced by a selected one of the alternative beams (241B, 242B, 251B, 253B, 261B, 262B) in accordance with a signal strength of the selected alternative beam while ignoring the communication beams except the alternative beams (241B, 242B, 251B, 253B, 261B, 262B). The ground station (10) communicates with the satellite through the best communication beam which is one of the plurality of communication beams (200B - 283B) emitted by the ground station (10).

## Description

### FIELD OF THE INVENTION

The present invention relates to a satellite tracking method. More particularly, the present invention relates to a satellite tracking method for ground station.

### BACKGROUND OF THE INVENTION

Due to the high-speed movement of Low-Earth Orbit (LEO) satellites relative to ground stations, the ground stations typically use the controllable beam direction feature of phased array antennas to adjust the signal receiving direction. This allows the antenna to track high-speed moving LEO satellites even when the antenna is stationary. Therefore, in the field of LEO satellite tracking technology, enhancing the control capabilities of phased array antennas to achieve better satellite tracking efficiency is an important issue.

Among the various existing methods for tracking satellites by changing the signal receiving direction, the most common approach is to scan the beams that receive signals from different directions one-by-one, identify the beam with the maximum signal strength, and then take the beam with the maximum signal strength for communicating with the satellite. However, the approach that scans the beams one-by-one is getting inadequate both in efficiency and timeliness as the scale of the array antenna increases and the beam resolution becomes higher.

### SUMMARY OF THE INVENTION

Accordingly, one of the objects of the present invention is to provide a satellite tracking method for ground station, wherein the trajectory of a satellite could be tracked precisely without scanning all the communication beams emitted from the ground station.

In one aspect of view, the present invention provides a satellite tracking method for ground station, which is suitable for a ground station communicating with a satellite, wherein the ground station communicates with the satellite through a best communication beam which is one of a plurality of communication beams emitted by the ground station, center positions of the communication beams are arranged regularly, and coverages of two of the communication beams adjacent to each other are partially overlapped. The method comprises selecting a plurality of alternative beams, each of which corresponds to one of the communication beams adjacent to the best communication beam; and determining whether the best communication beam is going to be replaced by a selected one of the alternative beams in accordance with a signal strength of the selected alternative beam while ignoring the communication beams except the alternative beams, which comprises performing a scanning operation for each of the alternative beams, wherein the scanning operation determines whether a first signal strength of the alternative beam under scanning is greater than a second signal strength of the best communication beam both measured while communicating with the satellite, and sets the alternative beam under scanning as a candidate for replacing the best communication beam when the first signal strength is greater than the second signal strength.

In one embodiment, the step of selecting the alternative beams comprises selecting all the communication beams adjacent to the best communication beam as the alternative beams when the ground station still communicates with the satellite and the best communication beam has been unchanged since the ground station starts to communicate with the satellite; and setting the best communication beam being replaced most recently as a previous communication beam and selecting the alternative beams in accordance with relationship between a position of the best communication beam and a position of the previous communication beam when the ground station still communicates with the satellite and the best communication beam has been changed since the ground station starts to communicate with the satellite.

In one further embodiment, the step of setting the best communication beam being replaced most recently as the previous communication beam and selecting the alternative beams in accordance with relationship between the position of the best communication beam and the position of the previous communication beam comprises selecting a central beam, wherein a relative direction from the best communication beam to the central beam is the same as a relative direction from the previous communication beam to the best communication beam; selecting at least one deviation beam, wherein a coverage of each of the at least one deviation beam is partially overlapped with a coverage of the central beam, and the coverage of each of the at least one deviation beam is partially overlapped with a coverage of the best communication beam; and setting the central beam and the at least one deviation beam as the alternative beams.

In one embodiment, center positions of three of the communication beams adjacent to each other form an equilateral triangle.

In one embodiment, the satellite tracking method for ground station further comprises selecting a plurality of directions; assigning a unique first reference number to each of the directions to obtain a plurality of the first reference numbers; and performing a setting operation for each of the communication beams, wherein the setting operation comprises assigning a unique second reference number to a processed beam, wherein the processed beam is the communication beam which is processed by the setting operation; and labeling the communication beams adjacent to the processed beam by using the second reference number and the first reference numbers.

In one further embodiment, the step of selecting the alternative beams comprises selecting all the communication beams labeled with the second reference number assigned to the best communication beam and any one of the first reference numbers as the alternative beams when the ground station still communicates with the satellite and the best communication beam has been unchanged since the ground station starts to communicate with the satellite; and setting the best communication beam which is replaced most recently as a previous communication beam and selecting the alternative beams in accordance with relationship between a position of the best communication beam and a position of the previous communication beam when the ground station still communicates with the satellite and the best communication beam has been changed since the ground station starts to communicate with the satellite.

In one further embodiment, the step of setting the best communication beam which is replaced most recently as the previous communication beam and selecting the alternative beams in accordance with relationship between the position of the best communication beam and the position of the previous communication beam comprises selecting a central beam, wherein when the best communication beam is labeled with the second reference number assigned to the previous communication beam and a direction reference number, the central beam is one of the communication beams which is labeled with the second reference number assigned to the best communication beam and the direction reference number, wherein, the direction reference number is one of the first reference numbers; selecting at least one deviation beam, wherein a coverage of each of the at least one deviation beam is partially overlapped with a coverage of the central beam, and the coverage of each of the at least one deviation beam is partially overlapped with a coverage of the best communication beam; and setting the central beam and the at least one deviation beam as the alternative beams.

By applying the technique solutions provided above, the satellite tracking method for ground station provided by the present invention makes it possible to select one of the communication beams which is most suitable for communicating with the satellite without scanning all the communication beams. Furthermore, the amount of communication beams required to be scanned during communication could be reduced by referring to the result obtained from tracking the satellite, thereby increasing efficiency of satellite tracking.

### BRIEF DESCRIPTION OF THE DRAWINGS

FIG. 1 is a schematic diagram of a ground station in accordance with one embodiment of the present invention.
FIG. 2 is a schematic diagram showing relationships between the communication beams and the radar in accordance with one embodiment of the present invention.
FIG. 3 is a flow chart of the satellite tracking method for ground station in accordance with one embodiment of the present invention.
FIG. 4 is a flow chart showing details of step S304 in accordance with one embodiment of the present invention.
FIG. 5 is a flow chart showing details of step S304 in accordance with another embodiment of the present invention.
FIG. 6 is a flow chart showing details of step S504 in accordance with one embodiment of the present invention.
FIG. 7 is a flow chart showing detailed details of step S502 in accordance with one embodiment of the present invention.
FIG. 8 is a flow chart of the satellite tracking method for ground station in accordance with another embodiment of the present invention.
FIG. 9A is a flow chart showing flows of labeling the communication beams in the satellite tracking method for ground station in accordance with one embodiment of the present invention.
FIG. 9B is a flow chart showing the setting operation performed in step S904 in accordance with one embodiment of the present invention.
FIG. 10 is a schematic diagram showing results of labeling the communication beams in the satellite tracking method for ground station in accordance with one embodiment of the present invention.

### DETAILED DESCRIPTION OF PREFERRED EMBODIMENTS

The invention will now be described more specifically with reference to the following embodiments. It is to be noted that the following descriptions of preferred embodiments of this invention are presented herein for the purpose of illustration and description only. It is not intended to be exhaustive or to be limited to the precise form disclosed.

It is also noted that, in order to make the description be easily understood by those with ordinary skill in the art, "a first unit electrically coupled to a second unit" means that electronic signals can be transmitted between the first unit and the second unit, and, unless other limitations are made, transmission of the electronic signals might be unidirectional or bidirectional, and transmitting method of the electronic signals might be wired or wireless.

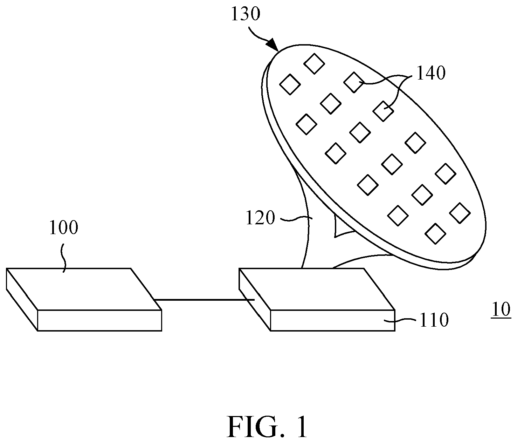

Please refer to FIG. 1, which is a schematic diagram of a ground station in accordance with one embodiment of the present invention. In this embodiment, the ground station 10 comprises a processor 100, an antenna signal transmitter 110, an antenna support 120 and a multi-array antenna 130. The processor 100 is electrically coupled to the antenna signal transmitter 110 so that the processor 100 and the antenna signal transmitter 110 can transmit electronic signals to each other. The antenna support 120 is built to connect between the multi-array antenna 130 and the antenna signal transmitter 110 to support the multi-array antenna 130, and wires for transmitting electronic signals between the multi-array antenna 130 and the antenna signal transmitter 110 can be attached to or built in the antenna support 120. The multi-array antenna 130 comprises a plurality of antenna arrays 140, each of which is configured to receive electromagnetic waves, and the received electromagnetic waves are converted into electronic signals by the multi-array antenna 130. The electronic signals converted from the received electromagnetic waves are transmitted from the multi-array antenna 130 to the antenna signal transmitter 110 through the wires attached to or built in the antenna support 120, and are then transmitted to the processor 100 for subsequent operations.

The hardware structure described above could be modified in different embodiments while providing the same functionality. For example, the processor 100 could be configured to exchange electronic signals with the antenna signal transmitter 110 through wire or wireless connections, the antenna support 120 could be built away from the antenna signal transmitter 110, and the multi-array antenna 130 could be designed to be rotatable relative to the antenna support 120. A ground station having the hardware structures different from those described above but providing the same functionality can be applied to perform the satellite tracking method described below, in other words, those with ordinary skill in the art would know that the satellite tracking method for ground station provided by the present invention is not limited to be used in the hardware structures described in the embodiments presented in the specification.

To receive signals transmitted by satellites over a range as wide as possible, it is common that the multi-array antenna 130 is designed to receive electromagnetic waves from different directions. In this embodiment, one or more antenna arrays 140 can be used to create a radio wave beam which is with a certain beam width and receives electromagnetic waves from a specific direction. The radio wave beam created as described above is referred to as a communication beam in this specification, the range covered by the beam width of each communication beam is referred to as a coverage of the communication beam, and the communication beam being used currently for communicating with a satellite is specifically referred to as a best communication beam. To make the description clear and easy to understand, the embodiments provided below assume that one communication beam is formed by and corresponds to a single antenna array. However, it is noted that the technique solution can also be applied in situations where multiple antenna arrays combine to form a single communication beam.

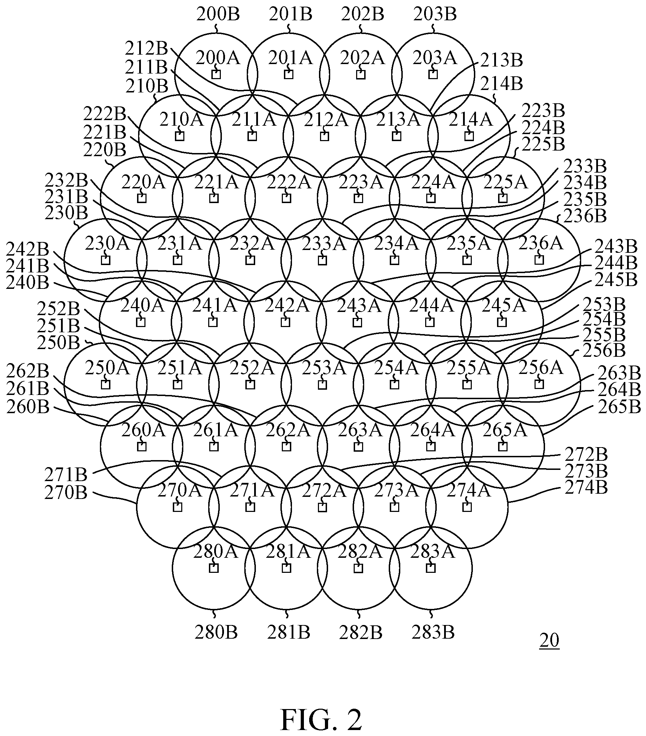

Please refer to FIG. 2, which is a schematic diagram showing relationships between the communication beams and the radar in accordance with one embodiment of the present invention. In this embodiment, the multi-array antenna 20 comprises a plurality of antenna arrays 200A - 203A, 210A - 214A, 220A - 225A, 230A - 236A, 240A - 245A, 250A - 256A, 260A - 265A, 270A - 274A, and 280A - 283A, wherein each of the antenna array forms a corresponded communication beam, that is, the multi-array antenna 20 produces a plurality of communication beams 200B - 203B, 210B - 214B, 220B - 225B, 230B - 236B, 240B - 245B, 250B - 256B, 260B - 265B, 270B - 274B, and 280B - 283B. In this embodiment, the coverage of two communication beams adjacent to each other is designed to partially overlap in order to maintain uninterrupted communication with satellites within a communication range of the multi-array antenna 20.

It is noted that, in this specification, the two communication beams adjacent to each other refers to two antenna arrays which generate these two communication beams being adjacent to each other. Furthermore, the term "two antenna arrays adjacent to each other" means that a line connecting the centers of the two adjacent antenna arrays is fully located within the coverages of the two communication beams generated by these two antenna arrays. For example, in the embodiment shown in FIG. 2, because the line connecting the centers of antenna arrays 251A and 241A is located within either the coverage of the communication beam 251B or the coverage of the communication beam 241B, the antenna 251A and 241A are adjacent to each other and the communication beams 251B and 241B are adjacent to each other as well. On the contrary, the antenna array 251A and the antenna array 242A are not adjacent to each other because a part of the line connecting the centers of antenna arrays 251A and 242A is located neither within the coverage of the communication beam 251B nor within the coverage of the communication beam 242B. For example, a part of the line connecting the centers of antenna arrays 251A and 242A is located within the coverage of the communication beam 252B or 241B and outside of the coverages of the communication beams 251B and 242B. Furthermore, in this embodiment, the centers of three adjacent communication beams form an equilateral triangle. For example, the antenna arrays 251A, 240A, and 241A are adjacent to each other, and the centers of antenna arrays 240A, 241A, and 251A, i.e., the centers of the communication beams 240B, 241B and 251B, form an equilateral triangle. It should be noted that whether the centers of the three adjacent communication beams form an equilateral triangle or not does not affect the normal operation of the invention. The arrangement of the antenna arrays on the multi-array antenna 20 can be changed based on actual needs.

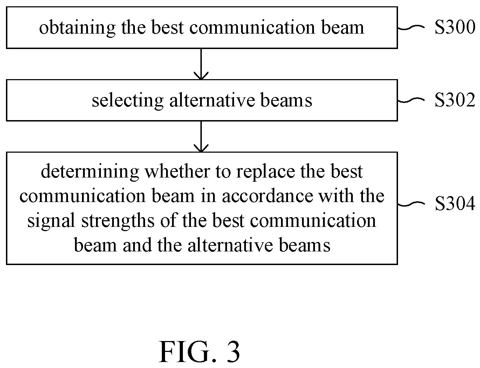

Please refer to both FIG. 2 and FIG. 3, wherein FIG. 3 is a flow chart of the satellite tracking method for ground station in accordance with one embodiment of the present invention. It is noted that the processes described below can be written as software code and operated by the processor 100 to control the multi-array antenna 130 to achieve desired effects. In this embodiment, the communication beam currently being used for communicating with the satellite, which is referred to as the best communication beam, is obtained in step S300. After that, based on the position of the best communication beam, all communication beams adjacent to the best communication beam are selected as alternative beams in step S302. The communication beams which are not adjacent to the best communication beam might be further selected as alternative beams in other embodiments in accordance with specific needs of those embodiments. This variation does not affect the normal operations of the technique solution provided in this embodiment. Take the embodiment shown in FIG. 2 as the example and assume the best communication beam is the communication beam 261B, the communication beams 260B, 251B, 252B, 262B, 271B and 270B adjacent to the communication beam 261B are selected as the alternative beams in step S302.

After selecting the alternative beams, the signal strength of the signals received from the satellite through the best communication beam is compared with the signal strengths of the signals received from the same satellite through the alternative beams, and the comparison results obtained by comparing the signal strengths described above are used to determine whether the best communication beams should be replaced by one of the alternative beams, so that the alternative beam replacing the best communication beam becomes a new best communication beam (step S304). It is worth mentioning that, during execution of step S304, the signal strengths of the communication beams which are neither selected as the alternative beams nor the best communication beam are not considered while deciding whether the best communication beam should be replaced. Accordingly, during the process of determining whether the best communication beam should be replaced, it is not necessary to scan all the communication beams to obtain corresponding signal strengths. Therefore, compared to the conventional technologies which scan each and every one of all the communication beams, workload of the technique solution provided above could be reduced significantly.

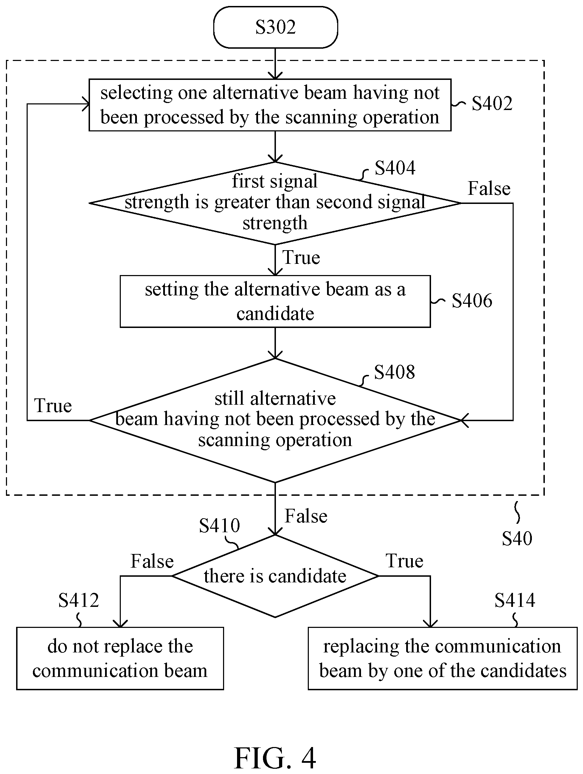

Please refer to FIG. 4 for an embodiment with more detailed description, wherein FIG. 4 is a flow chart showing details of step S304 in accordance with one embodiment of the present invention. In this embodiment, after completing the alternative beam selection performed in step S302, each of the alternative beams is processed by a scanning operation to compare the signal strength thereof (hereinafter also referred to as the first signal strength) with the signal strength of the best communication beam (hereinafter also referred to as a second signal strength) in step S40. In order to realize the scanning operation, in step S40 of this embodiment, one of the alternative beams which has not yet been processed by the scanning operation is randomly selected in step S402, and then it is determined that whether the signal strength of the selected alternative beam is greater than the second signal strength in step S404. When the signal strength of the selected alternative beam is not greater than the second signal strength, the flow proceeds to step S408 to determine whether there are still alternative beams which have not been processed by the scanning operation yet. On the contrary, when the signal strength of the selected alternative beam is greater than the second signal strength, the selected alternative beam is designated as one of the candidates that could potentially replace the best communication beam in step S406.

After completing step S406, the flow also proceeds to step S408 to determine whether there are still alternative beams which have not been processed by the scanning operation yet. When there exists alternative beams which have not been processed by the scanning operation, the flow proceeds to step S402 to select one alternative beam from those who have not been processed by the scanning operation. On the contrary, when all the alternative beams have been processed by the scanning operation, the flow proceeds to step S410 to determine whether any candidate for replacing the best communication beam is found during the scanning operation. When a result of the determination in step S410 is false, that is, there is no first signal strength found to be greater than the second signal strength during the scanning operation (step S40), the flow proceeds to step S412 so that the result obtained through the scanning operation is that the best communication beam would not be replaced. On the contrary, when the result of the determination in step S410 is true, that is, at least one first signal strength is found to be greater than the second signal strength during the scanning operation, the flow proceeds to step S414 to select one of the candidates to replace the best communication beam, thereby becoming a new best communication beam.

In this embodiment, the candidate selected in step S414 is the alternative beam with the highest first signal strength. However, those skilled in the art may choose a different candidate in this step based on specific requirements, and the variation would not affect the normal operation of the technique solution provided by the present invention.

It is noted that, in order to make step S402 to operate normally, every alternative beam should be initially set to a status which represents that the alternative beam has not been processed by the scan operation before proceeding to step S402 from step S302 in this embodiment. Furthermore, during the entire scanning operation (step S40), each alternative beam selected in step S402 should be labeled as "has been processed by the scanning operation" at an appropriate timing. In consideration of necessity of checking whether any alternative beam which has not been processed by the scanning operation does exist in step S408, the appropriate timing for labeling the alternative beam as having been processed by the scanning operation could be, for example, after step S402, after step S404, or after step S406. Specifically, the alternative beam could be labeled as having been processed by the scanning operation at the time points such as: between steps S402 and S404, between steps S404 and S408, or between step S406 and S408. It should be understood that the labeling process also could be performed during operations of step S402 or S404. Those skilled in the art can freely adjust the timing of the labeling process based on the spirit of the technical content described above.

By applying the embodiment illustrated in FIG. 4, the technique solution provided by the present invention determines whether to replace the best communication beam with one of the communication beams after scanning only the signal strengths of the communication beams adjacent to the best communication beam. Therefore, by applying the technique solutions described above, workload needed during determining whether to switch to a different communication beam to communicate with a specific satellite can be reduced significantly, thereby accelerating the process of deciding whether to replace the best communication beam. Furthermore, those with ordinary skill in the art could decide whether to replace the best communication beam during the whole process of communicating with a specific satellite by applying the technique solutions described above.

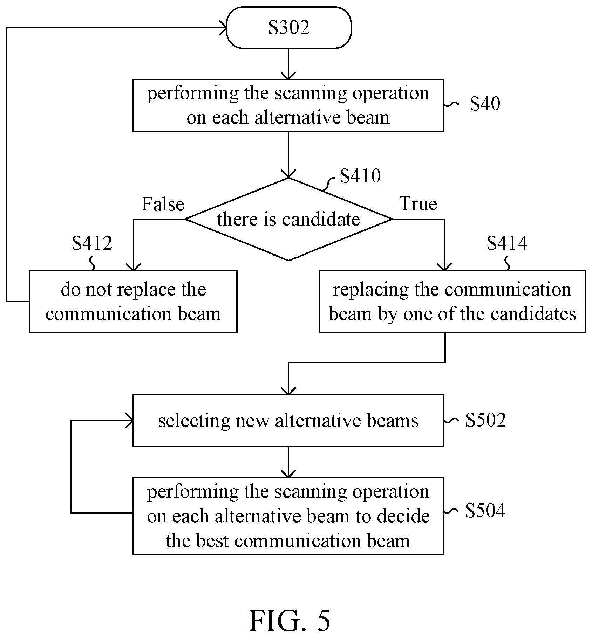

Besides the technique solutions described above, the present invention further provides a technique solution which further accelerates the process of determining whether to replace the best communication beam. Please refer to FIG. 5, which is a flow chart showing details of step S304 in accordance with another embodiment of the present invention. The detailed content about operations performed in step S40 and steps S410~S414 is described as above and would not be repeated here. In this embodiment, the flow proceeds to step S502 after completing step S414 to select new alternative beams in accordance with the relationship between the position of the best communication beam used currently and the position of the best communication beam which is replaced by the best communication beam used currently. After completing step S502, the newly selected alternative beams would be processed by the scanning operation described above such that whether to replace the best communication beam could be decided in step S504.

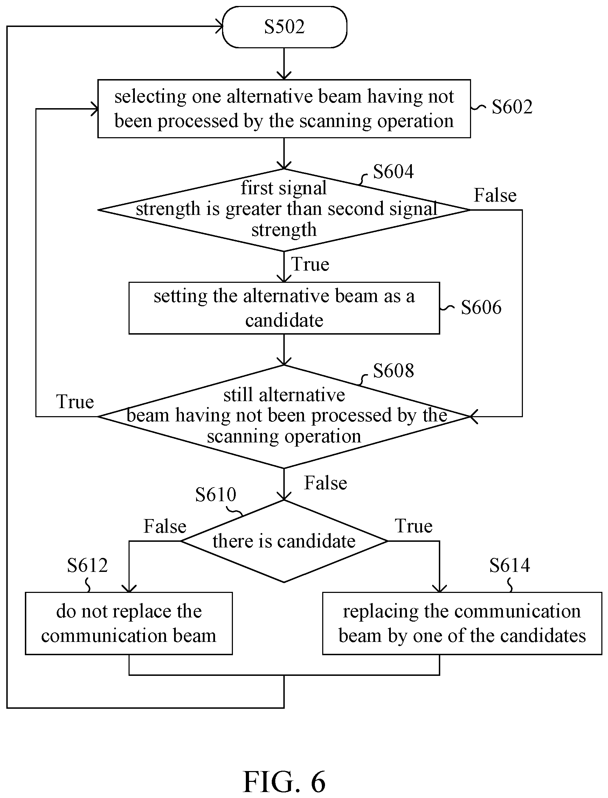

Please refer to FIG. 6, which is a flow chart showing details of step S504 in accordance with one embodiment of the present invention. The embodiment shown in FIG. 6 is similar to that shown in FIG. 4, and the detailed operations of steps S602 to S614 can be referred to the description of steps S402 to S414 in FIG. 4 and would not be repeated here. Different from the embodiment shown in FIG. 4, after completing step S612 or step S614, the flow returns to step S502 to select new alternative beams to prepare for the next determination of whether to replace the best communication beam.

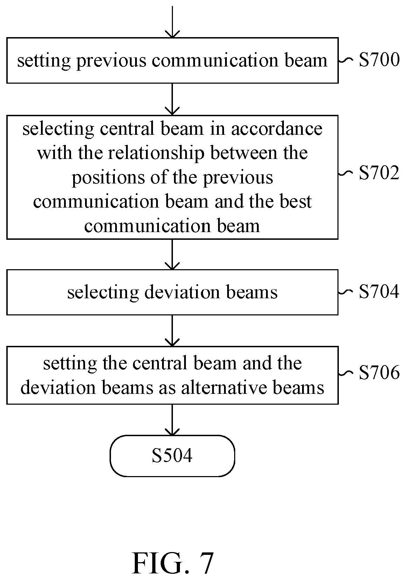

For further reducing the workload, in step S502, the alternative beams are selected based on the relationship between the position of the best communication beam used currently and the position of the best communication beam being replaced by the best communication beam used currently instead of selecting all the communication beams being adjacent to the best communication beam as the alternative beams. Please refer to FIG. 7, which is a flow chart showing detailed details of step S502 in accordance with one embodiment of the present invention. In this embodiment, the best communication beam being replaced most recently is set as a previous communication beam in step S700, and then a central beam is selected in accordance with the relationship between the positions of the previous communication beam and the best communication beam in step S702. The central beam in this embodiment is selected such that a relative direction extent from the best communication beam to the central beam is the same as a relative direction extent from the previous communication beam to the best communication beam. Taking the embodiment illustrated in FIG. 2 as an example and assuming the previous communication beam being the communication beam 261B while the best communication beam being the communication beam 262B, that is, the best communication beam moves to the right relative to the previous communication beam, the central beam should also be located to the right of the best communication beam. Therefore, the selected central beam would be the communication beam 263B which is located to the right of the best communication beam, i.e., the communication beam 262B.

After selecting the central beam in step S702, the flow proceeds to step S704 to select at least one deviation beam in accordance with the central beam and the best communication beam. In this embodiment, each deviation beam is selected such that a coverage of the selected deviation beam is partially overlapped with a coverage of the central beam, and the coverage of the selected deviation beam is also partially overlapped with a coverage of the best communication beam. Following the example for explaining step S702, when the best communication beam is the communication beam 262B and the central beam is the communication beam 263B, the deviation beams would be the communication beams 253B and 272B.

After selecting the central beam and the deviation beams by the steps described above, the central beam and the deviation beams are together set as newly selected alternative beams in step S706, and the newly selected alternative beams would be further processed by step S504 as described in the previous embodiments.

In most scenarios, the amount of alternative beams selected through steps S700~S706 is less than the amount of communication beams adjacent to the best communication beam. Therefore, evaluating the alternative beams selected through steps S700~S706 to determine whether to replace the best communication beam is generally more efficient, in terms of both time and computational resources, than directly evaluating all communication beams adjacent to the best communication beam.

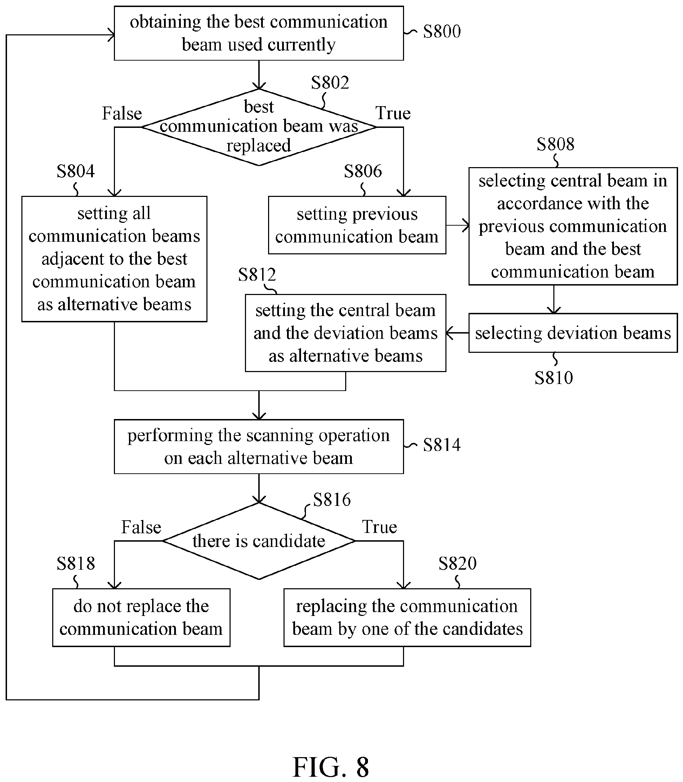

The flow described above is provided solely for illustrating technical principles of the present invention. Those with ordinary skill in the art could modify the process based on the disclosure herein, as long as the objective of determining whether to replace the best communication beam based on the adjacent candidate communication beams is still achieved. For example, the flow illustrated in FIG. 3 ~ FIG.7 could be modified as the embodiment shown in FIG. 8. Please refer to FIG. 8, which is a flow chart of the satellite tracking method for ground station in accordance with another embodiment of the present invention. In this embodiment, the satellite tracking method would obtain the best communication beam used currently in step S800, and it is determined whether the best communication beam has been replaced before in step S802. When it is determined in step S802 that the best communication beam has not been replaced before, the flow proceeds to step S804 to select all the communication beams adjacent to the best communication beam used currently as the alternative beams and, after completing step S804, the flow proceeds to step S814 for further processing. On the contrary, when it is determined in step S802 that the best communication beam used for communicating with the same satellite has ever been replaced, the flow proceeds to steps S806 ~ S812 to set the previous communication beam, select the central beam and deviation beams and set the central beam and the deviation beams as the alternative beams. It is noted that steps S806 ~ S812 in this embodiment are similar to steps S700 ~ S706 in the embodiment described above, therefore detailed descriptions of these steps can be referred to those made for steps S700 ~ S706 and are not repeated here.

After completing step S804 or step S812 for obtaining the alternative beams, the flow proceeds to step S814 to compare the magnitude of the second signal strength with that of each first signal strength by using the scanning operation described above. Detailed operations performed by steps S814 ~ S820 could be referred to those described for steps S40 ~ S414 shown in FIG. 4 or those described for steps S602 ~ S614 shown in FIG. 6, which are not repeated here.

In summary, when communication between the ground station and the same satellite is maintained and the best communication beam has not been replaced, all communication beams adjacent to the best communication beam are selected as the alternative beams in the embodiment shown in FIG. 8. On the contrary, when communication between the ground station and the same satellite is maintained and the best communication beam has been replaced before, the best communication beam which is replaced most recently is set as the previous communication beam and the alternative beams are selected in accordance with the position relationship between the best communication beam used currently and the previous communication beam. Accordingly, the mechanisms for selecting alternative beams can be varied in accordance with different situations such that the amount of the alternative beam can be reduced in many cases.

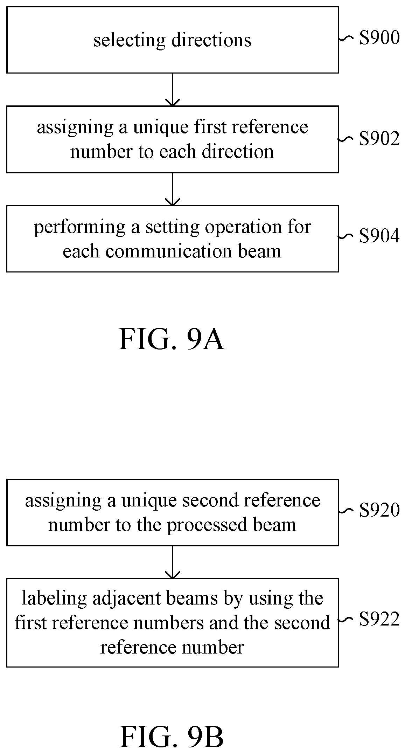

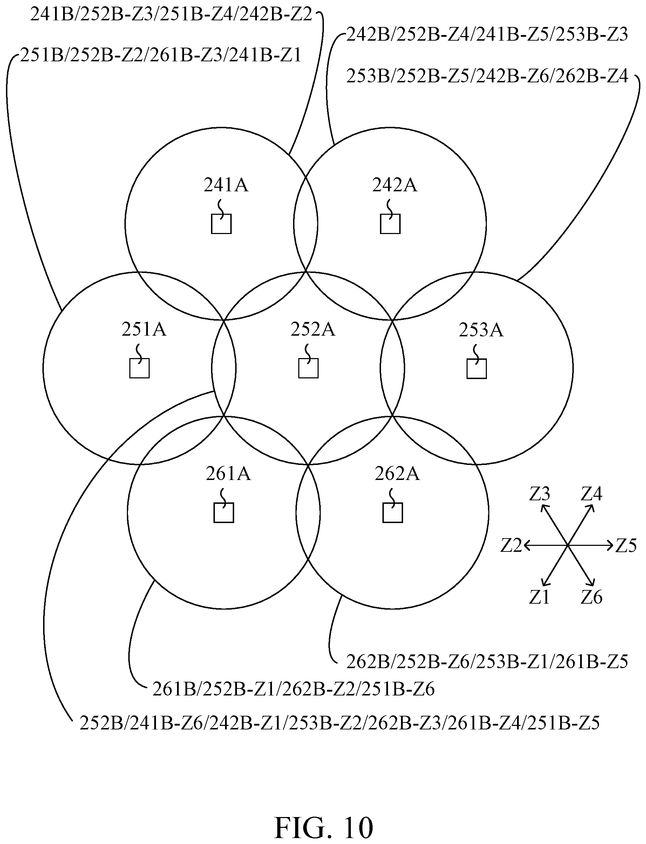

Furthermore, the present invention also provides a method for simplifying processes of selecting the central beam and the deviation beams through using symbolic labeling. Please refer to both FIG. 9A and FIG. 10, wherein FIG. 9A is a flow chart showing flows of labeling the communication beams in the satellite tracking method for ground station in accordance with one embodiment of the present invention, and FIG. 10 is a schematic diagram showing results of labeling the communication beams in the satellite tracking method for ground station in accordance with one embodiment of the present invention. In this embodiment, the satellite tracking method divides the entire layout into multiple directions in step S900, wherein each of the directions is an orientation started from a specific communication beam to one of a communication beam adjacent to the specific communication beam. After completing step S900, each of the directions is assigned a reference number in step S902. Taking the communication-beam-arrangement shown in FIG. 2 as an example, the first reference numbers assigned to the directions in this embodiment are as follows: the first reference number assigned to the direction toward the lower-left is direction Z1, the first reference number assigned to the direction toward the left is direction Z2, the first reference number assigned to the direction toward the upper-left is direction Z3, the first reference number assigned to the direction toward the upper-right is direction Z4, the first reference number assigned to the direction toward the right is direction Z5, and the first reference number assigned to the direction toward the lower-right is direction Z6.

After assigning the first reference numbers to the directions, a setting operation for each of the communication beams is performed in step S904 to labeling the communication beams adjacent to a processed beam, which is the communication beam being processed by the setting operation, in accordance with the processed beam and the relative direction between the processed beam and the communication beams adjacent thereto. The setting operation is described through using FIG. 9B and taking the communication beam 252B shown in FIG. 2 as an example. When the communication beam 252B shown in FIG. 2 is processed by the setting operation, i.e., the processed beam is the communication beam 252B, the reference number "252B" could be assigned as a second reference number to the processed beam in step S920. After completing step S920, those communication beams adjacent to the processed beam could be labeled by using the second reference number and the first reference numbers Z1~Z6 defined as above in step S922. As illustrated in FIG. 10, in the scenario described above, the communication beam 261B, which is located to the lower-left of and adjacent to the communication beam 252B, is labeled as "252B-Z1", thereby representing that the communication beam 261B is the adjacent communication beam located in the direction Z1 relative to the communication beam 252B. Similarly, the communication beam 251B, which is located to the left of and adjacent to the communication beam 252B, is labeled as "252B-Z2", thereby representing that the communication beam 251B is the adjacent communication beam located in the direction Z2 relative to the communication beam 252B; the communication beam 241B, which is located to the upper-left of and adjacent to the communication beam 252B, is labeled as "252B-Z3", thereby representing that the communication beam 241B is the adjacent communication beam located in the direction Z3 relative to the communication beam 252B; the communication beam 242B, which is located to the upper-right of and adjacent to the communication beam 252B, is labeled as "252B-Z4", thereby representing that the communication beam 242B is the adjacent communication beam located in the direction Z4 relative to the communication beam 252B; the communication beam 253B, which is located to the right of and adjacent to the communication beam 252B, is labeled as "252B-Z5", thereby representing that the communication beam 253B is the adjacent communication beam located in the direction Z5 relative to the communication beam 252B; and the communication beam 262B, which is located to the lower-right of and adjacent to the communication beam 252B, is labeled as "252B-Z6", thereby representing that the communication beam 262B is the adjacent communication beam located in the direction Z6 relative to the communication beam 252B.

From another aspect of view, because the communication beam 252B is located to the lower-right of the communication beam 241B, the communication beam could also be labeled as "241B-Z6" when the setting operation performed in step S904 is processing the communication beam 241B. Similarly, the communication beam 252B could be also labeled as "242B-Z1", "253B-Z2", "262B-Z3", "261B-Z4" and "251B-Z5" because the communication beam is located to the lower-left of the communication beam 242B, to the left of the communication beam 253B, to the upper-left of the communication beam 262B, to the upper-right of the communication beam 261B, and to the right of the communication beam 251B, respectively.

By applying the technique solutions provided above, one communication beam might be labeled by several reference numbers after being processed by the setting operation. These reference numbers could be stored in a storage which is accessible to the processor 100. Therefore, the processor 100 could map the different reference numbers to the same communication beam or different communication beams in accordance with the stored reference numbers.

For the communication beams illustrated in FIG. 10, the reference numbers assigned to the communication beam 252B are 252B, 241B-Z6, 242B-Z1, 253B-Z2, 262B-Z3, 261B-Z4 and 251B-Z5, the reference numbers assigned to the communication beam 241B are 241B, 252B-Z3, 251B-Z4 and 242B-Z2, the reference numbers assigned to the communication beam 242B are 242B, 252B-Z4, 241B-Z5 and 253B-Z3, the reference numbers assigned to the communication beam 253B are 253B, 252B-Z5, 242B-Z6 and 262B-Z4, the reference numbers assigned to the communication beam 262B are 262B, 252B-Z6, 253B-Z1 and 261B-Z5, the reference numbers assigned to the communication beam 261B are 261B, 252B-Z1, 262B-Z2 and 251B-Z6, and the reference numbers assigned to the communication beam 251B are 251B, 252B-Z2, 261B-Z3 and 241B-Z1.

The aforementioned setting operation, in which several reference numbers are assigned to one communication beam, could be applied with the embodiments shown in FIG. 3 ~ 8, thereby simplifying the procedures for selecting the alternative beams, the central beam and the deviation beams, etc. To make it to be possible that those combined technique solutions could provide proper functionality, the flow illustrated in FIG. 9A is arranged at a time point at which the processor 100 is connected to the multi-array antenna 130 in the first time, and the reference numbers set by the flow illustrated in FIG. 9A are stored in storage apparatuses which can be accessed by the processor 100 such that the processor 100 could reach the stored reference numbers for further processing.

For example, when the best communication beam is the communication beam 252B and it is required to select all the communication beams adjacent to the communication beam 252B as the alternative beams after each and every communication beam has been assigned reference numbers by the setting operation described above, the processor 100 utilizing the satellite tracking method provided by the present invention could select the required alternative beams via following the rules for producing the reference numbers. Therefore, the processor 100 could select the communication beams which are labeled as 252B-Z1, 252B-Z2, 252B-Z3, 252B-Z4, 252B-Z5 and 252B-Z6, i.e., the communication beams 261B, 251B, 241B, 242B, 253B and 262B, as the alternative beams. Similarly, assuming that the best communication beam has been switched from the communication beam 261B to the communication beam 252B, it could be found that the best communication is switched following the direction Z4 from the communication beam 261B, and, therefore, following the principle of reference number setting proposed in the setting operation, the new best communication beam could also be labeled as 261B-Z4. In this scenario, the communication beam adjacent to and located at direction Z4 of the new best communication beam 252B, i.e., the communication beam 252B-Z4, is selected as the central beam in accordance with the technique solutions provided above. Furthermore, according to the first reference numbers defined previously for the six directions, the deviation beams selected for the central beam 252B-Z4 (i.e., 242B) can be determined by referring to the communication beam 252B and the direction Z4. In one embodiment, the communication beams adjacent to the central beam 252B and one counterclockwise or one clockwise step from the direction Z4, i.e., the communication beams 252B-Z3 (i.e., 241B) and 252B-Z5 (i.e., 253B) are selected as the deviation beams.

In summary, the satellite tracking method for ground station provided by the present invention makes it possible to select one of the communication beams which is most suitable for communicating with the satellite without scanning all the communication beams. Furthermore, the amount of communication beams required to be scanned during communication could be reduced by referring to the result obtained from tracking the satellite, thereby increasing efficiency of satellite tracking.

## Claims

1. A satellite tracking method for ground station (10), which is suitable for a ground station (10) communicating with a satellite, wherein the ground station (10) communicates with the satellite through a best communication beam which is one of a plurality of communication beams (200B - 283B) emitted by the ground station (10), center positions of the communication beams (200B - 283B) are arranged regularly, coverages of two of the communication beams adjacent to each other are partially overlapped, and the satellite tracking method is **characterized in** comprising:
selecting a plurality of alternative beams (241B, 242B, 251B, 253B, 261B, 262B), each of which corresponds to one of the communication beams adjacent to the best communication beam (252B); and
determining whether the best communication beam (252B) is going to be replaced by a selected one of the alternative beams (241B, 242B, 251B, 253B, 261B, 262B) in accordance with a signal strength of the selected alternative beam while ignoring the communication beams except the alternative beams, comprising:
performing a scanning operation for each of the alternative beams (241B, 242B, 251B, 253B, 261B, 262B), wherein the scanning operation determines whether a first signal strength of the alternative beam under scanning is greater than a second signal strength of the best communication beam both measured while communicating with the satellite, and sets the alternative beam under scanning as a candidate for replacing the best communication beam (252B) when the first signal strength is greater than the second signal strength.

2. The satellite tracking method according to claim 1, wherein selecting the alternative beams comprises:
when the ground station (10) still communicates with the satellite and the best communication beam has been unchanged since the ground station (10) starts to communicate with the satellite, selecting all the communication beams adjacent to the best communication beam (252B) as the alternative beams (241B, 242B, 251B, 253B, 261B, 262B); and
when the ground station (10) still communicates with the satellite and the best communication beam has been changed since the ground station (10) starts to communicate with the satellite, setting the best communication beam being replaced most recently as a previous communication beam (261B) and selecting the alternative beams in accordance with relationship between a position of the best communication beam (252B) and a position of the previous communication beam (261B).

3. The satellite tracking method according to claim 2, wherein setting the best communication beam being replaced most recently as the previous communication beam (261B) and selecting the alternative beams in accordance with relationship between the position of the best communication beam (252B) and the position of the previous communication (261B) beam comprises:
selecting a central beam (242B), wherein a relative direction (Z4) from the best communication beam (252B) to the central beam is the same as a relative direction (Z4) from the previous communication beam (261B) to the best communication beam (252B);
selecting at least one deviation beam (241B, 253B), wherein a coverage of each of the at least one deviation beam (241B, 253B) is partially overlapped with a coverage of the central beam (242B), and the coverage of each of the at least one deviation beam (241B, 253B) is partially overlapped with a coverage of the best communication beam (252B); and
setting the central beam (242B) and the at least one deviation beam (241B, 253B) as the alternative beams.

4. The satellite tracking method according to claim 1, wherein center positions of three of the communication beams (252B, 261B, 262B) adjacent to each other form an equilateral triangle.

5. The satellite tracking method according to claim 1, further comprising:
selecting a plurality of directions;
assigning a unique first reference number to each of the directions to obtain a plurality of the first reference numbers (Z1 - Z6); and
performing a setting operation for each of the communication beams, wherein the setting operation comprises:
assigning a unique second reference number (200B - 283B) to a processed beam, wherein the processed beam is the communication beam which is processed by the setting operation; and
labeling the communication beams adjacent to the processed beam by using the second reference number (200B - 283B) and the first reference numbers (Z1 - Z6).

6. The satellite tracking method according to claim 5, wherein selecting the alternative beams comprises:
when the ground station (10) still communicates with the satellite and the best communication beam has been unchanged since the ground station (10) starts to communicate with the satellite, selecting all the communication beams labeled with the second reference number (252B) assigned to the best communication beam (252B) and any one of the first reference numbers (Z1 - Z6) as the alternative beams (252B-Z1~252B-Z6); and
when the ground station (10) still communicates with the satellite and the best communication beam has been changed since the ground station (10) starts to communicate with the satellite, setting the best communication beam which is replaced most recently as a previous communication beam (261B) and selecting the alternative beams in accordance with relationship between a position of the best communication beam (252B) and a position of the previous communication beam (261B).

7. The satellite tracking method according to claim 6, wherein setting the best communication beam which is replaced most recently as the previous communication beam (261B) and selecting the alternative beams in accordance with relationship between the position of the best communication beam (252B) and the position of the previous communication beam (261B) comprises:
selecting a central beam (242A, i.e., 252B-Z4), wherein when the best communication beam (252A, i.e., 261B-Z4) is labeled with the second reference number (261B) assigned to the previous communication beam (261B) and a direction reference number (Z4), the central beam (252B-Z4) is one of the communication beams which is labeled with the second reference number (252B) assigned to the best communication beam (252B) and the direction reference number (Z4), wherein, the direction reference number (Z4) is one of the first reference numbers (Z1 - Z6);
selecting at least one deviation beam (241B, 253B), wherein a coverage of each of the at least one deviation beam (241B, 253B) is partially overlapped with a coverage of the central beam (242A), and the coverage of each of the at least one deviation beam (241B, 253B) is partially overlapped with a coverage of the best communication beam (252A); and
setting the central beam (242A) and the at least one deviation beam (241B, 253B) as the alternative beams.
